# EUROPEAN PATENT APPLICATION

(11) **EP 4 768 283 A1**
(43) Date of publication of application: **01.07.2026**
(21) Application number: 25187375.8
(22) Date of filing: 03.07.2025
(51) Int. Cl.: B60D 1/06, B60R 9/06, B60R 9/10

(54) **BICYCLE CARRIER BALL CLAMP STABILIZING STRUCTURE**

(30) Priority: 31.12.2024 TW 113151645
(71) Applicant: King Rack Industrial Co., Ltd., Taichung City (TW)
(72) Inventor: Wang, Chiu-Kuei, Taichung City (TW); Espesset, Hugues, 81160 SAINT JUERY (FR)
(74) Representative: Cabinet Chaillot

(57) **Abstract**

A bicycle carrier ball clamp stabilizing structure includes a trailer ball, a ball clamping assembly, a ball clamp cover, and a control assembly. The board of the ball clamp cover has protruding engagement edges. By operating the control handle, the ball clamping assembly is inserted into the engagement edges, allowing the ball clamping assembly to open while simultaneously supporting the ball clamping assembly to prevent it from drooping. Users do not need to hold the ball clamping assembly by hand. When operating the control handle to clamp the ball clamping assembly to the trailer ball, the guide portions are quickly guide the ball clamping assembly to move upward and secure it to the ball clamp cover, achieving a stable fixation effect.

## Description

### BACKGROUND OF THE INVENTION

### 1. Fields of the invention

The present invention relates to the field of bicycle carrier accessories, and more particularly, to a bicycle carrier ball clamp stabilizing structure.

### 2. Descriptions of Related Art

The ball clamping structure of Taiwan Patent No. I606944 submitted by the applicant, and the invention comprises a trailer ball, a ball clamping assembly, a ball clamp cover, a control assembly, and a frame structure. The characteristic is that the control assembly is used to control the ball clamping assembly to clamp or release the trailer ball, and the ball clamping assembly has the advantage of strong clamping force that is not easily loosened through three clamping pieces holding the trailer ball, making this invention effective in easy assembly of the carrier frame and high safety in use.

After the above product was launched, it was well-received in the market, especially since the ball clamping assembly could be fixed to the trailer ball by simply operating the control handle. However, there are areas for improvement in the above product:
1. With the conventional structure, to remove the ball clamping assembly from the ball clamp cover, it needs to be loosened a certain distance, making the operation cumbersome.
2. The conventional structure requires holding the ball clamping assembly by hand during use, which is less convenient.

The present invention intends to provide a bicycle carrier ball clamp stabilizing structure to eliminate shortcomings mentioned above.

### SUMMARY OF THE INVENTION

The present invention relates to a bicycle carrier ball clamp stabilizing structure, and comprises a trailer ball to be connected to a vehicle. A ball clamping assembly includes three equally-spaced clamping pieces which are adapted to clamp the trailer ball. Each of the clamping pieces has a locking edges protruding from an outer side thereof. A connection part is located on a top of the ball clamping assembly, and an opening is formed to a lower end of the ball clamping assembly. A ball clamp cover is fitted over the ball clamping assembly and has a pivot connection end on a top thereof. The ball clamp cover has multiple boards which have outwardly protruding guide portions located corresponding to the locking edges of the clamping pieces. A control assembly is connected to the pivot connection end of the ball clamp cover so as to control the ball clamping assembly to clamp or release the trailer ball. The control assembly includes a control handle and a control rod for controlling the ball clamping assembly. The control rod passes through the pivot connection end and is connected to the connection part of the ball clamping assembly. The control handle is pivotably connected to the control rod.

When operating the control handle to descend the control rod, the clamping pieces of the ball clamping assembly moves downward and is released from the trailer ball. Alternatively, when operating the control handle, the control rod rises, the clamping pieces of the ball clamping assembly moves upward and secures the trailer ball.

When the ball clamping assembly is to be released, the guide portions of the ball clamp cover insert into the locking edges so as to create friction to achieve a buffered descent effect to prevent the ball clamping assembly from directly detaching from the ball clamp cover.

The guide portions of the ball clamp cover gradually expand from top to bottom. When the ball clamping assembly needs to be released, the guide portions of the ball clamp cover and the locking edges create friction with each other, producing a buffered descent effect, preventing the ball clamping assembly from directly detaching from the ball clamp cover.

Furthermore, the present invention provides a bicycle carrier ball clamp stabilizing structure that can quickly lock the ball clamping assembly to the trailer ball. The structure has a stop portion formed to the protruding engagement edges. The stop portion is engaged with the locking edges of the ball clamping assembly through friction. Therefore, when the control assembly is operated downward, it causes the locking edges of the ball clamping assembly to gradually climb along the engagement edges. Additionally, since the guide portions are gradually expands from top to bottom, the friction increases when locking, and through the stop portion, a tight fit is created, allowing the locking edges of the ball clamping assembly to connect tightly within the stop portion, preventing detachment.

Furthermore, the present invention provides a bicycle carrier ball clamp stabilizing structure that can quickly lock the ball clamping assembly to the trailer ball. The pivot connection end of the ball clamp cover is sequentially equipped with a limiting piece, a pressure plate, a second plate, and an adjustment knob. The limiting piece holds a bar at the top of the clamping pieces, allowing the clamping pieces to pivot. The first plate is installed on the top of the limiting piece. The first plate has multiple detachment protrusions. The second plate presses on the top of the pressure plate. The control rod sequentially passes through the second plate, the pressure plate, and the limiting piece, then is connected to the ball clamping assembly. The control handle has an arc protrusion end. When releasing the trailer ball, the arc protrusion end contacts the detachment protrusions of the pressure plate, causing the clamping pieces of the ball clamping assembly to quickly open.

The pivot connection end of the ball clamp cover is rotatably connected to a cap.

The characteristics and effectiveness of the present invention are briefly described as follows:
1. The boards of the ball clamp cover have protruding engagement edges. By operating the control handle, the locking edges of the ball clamping assembly can slide smoothly downward along the engagement edges, allowing the ball clamping assembly to open while simultaneously supporting it to prevent drooping, eliminating the need to hold the ball clamping assembly by hand.
2. When operating the control handle to clamp the ball clamping assembly to the trailer ball, the guide portions can quickly guide the ball clamping assembly to move upward and secure it to the ball clamp cover, achieving a stable fixation effect.
3. Furthermore, detachment protrusions are placed on the pressure plate. When operating the control handle, the arc protrusion end contacts these detachment protrusions, allowing the first plate to be quickly pressed down, providing the advantage of improved operational efficiency.

The primary object of the present invention is to provide a bicycle carrier ball clamp stabilizing structure, where the protruding guide portions are set at the joining end of the ball clamp cover. By operating the control handle, the ball clamping assembly are inserted into the engagement edges, allowing the ball clamping assembly to open while simultaneously supporting the ball clamping assembly to prevent it from drooping, eliminating the need to hold the ball clamping assembly by hand. When operating the control handle to clamp the ball clamping assembly to the trailer ball, the stop portions of the guide portions quickly guide the ball clamping assembly to move upward and secure it to the ball clamp cover, achieving a stable fixation effect.

Another purpose of the present invention is to provide a bicycle carrier ball clamp stabilizing structure with detachment protrusions on the control assembly. When the front edge of handle of the control assembly contacts these detachment protrusions, it can quickly press down and release the ball clamp cover, improving usage efficiency.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Figure 1 is a perspective view of the present invention;
Figure 2 is an exploded view of the present invention;
Figure 3 is a cross-sectional structural view of the present invention in the separated state;
Figure 4 is a cross-sectional structural view of the present invention in the clamping state;
Figure 5 is a schematic view of the clamping state from another angle of Figure 4;
Figure 6 is a state diagram of the present invention in the released state,
   and
Figure 7 is a schematic view of the ball clamping assembly in the released state from Figure 6.

### DETAILED DESCRIPTION OF THE PREFERRED EMBODIMENT

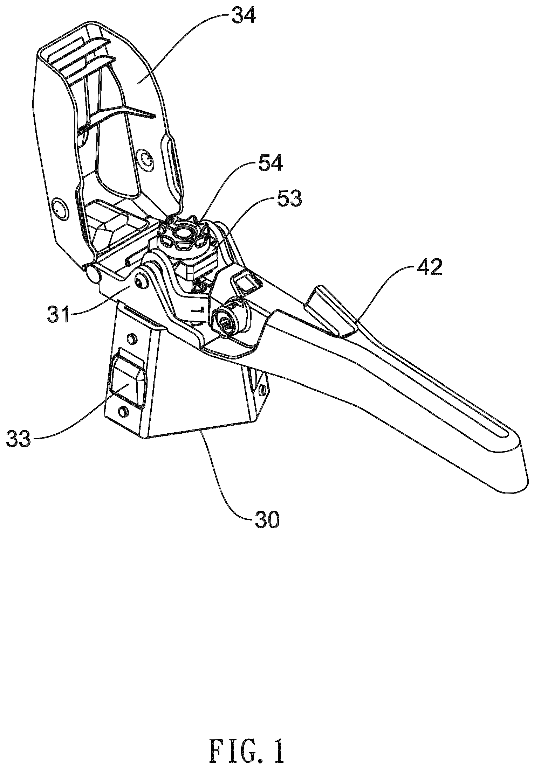

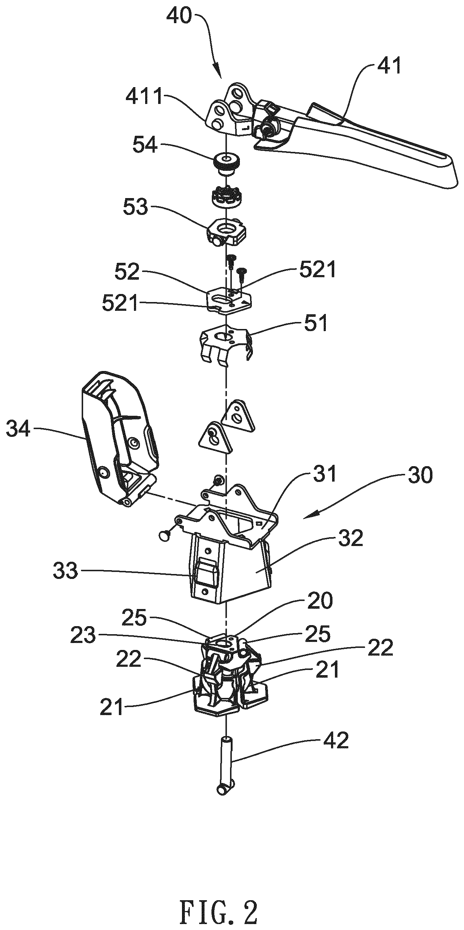

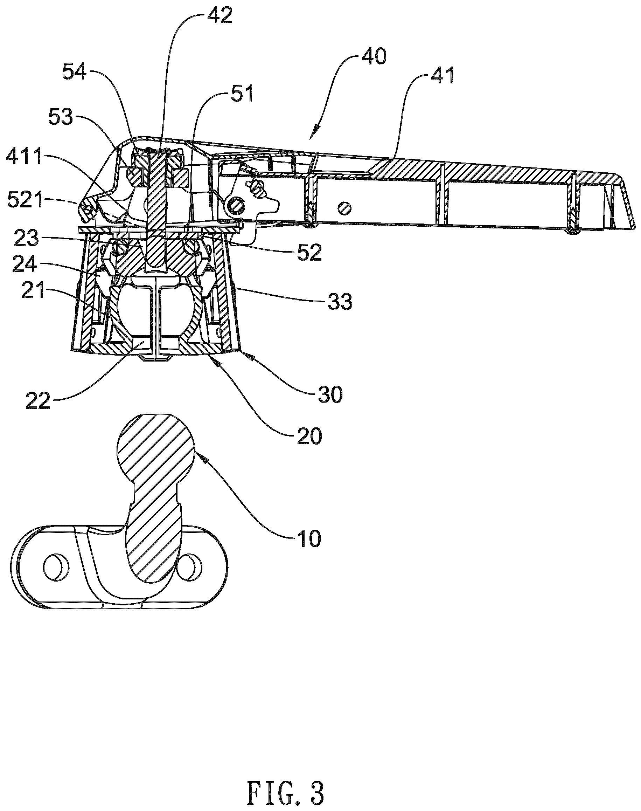

Referring to Figs. 1 to 4, the bicycle carrier ball clamp stabilizing structure of the present invention comprises a trailer ball 10, a ball clamping assembly 20, a ball clamp cover 30, and a control assembly 40. As shown in Figures 1 and 2, the trailer ball 10 is installed on a vehicle (not shown in the figure). As shown in Figures 2 to 5, the ball clamping assembly 20 comprises three equally-spaced clamping pieces 21. The clamping pieces 21 are used to clamp the trailer ball 10. Each of the clamping pieces 21 has a locking edge 22 protruding from the outer side thereof. The ball clamping assembly 20 has a connection part 23 located at a top thereof, and an opening 24 is formed at the lower end of the ball clamping assembly 20 by the clamping pieces 21. Additionally, each clamping piece 21 has a bar 25 formed on a top thereof.

As shown in Figures 1 to 5, the ball clamp cover 30 is fitted over the ball clamping assembly 20. The ball clamp cover 30 has a pivot connection end 31 connected to its top. The ball clamp cover 30 has multiple boards 32, and the boards 32 have outwardly protruding guide portions 33 located corresponding to the locking edges 22 of the clamping pieces 21, and along the rise of the guide portion 33 forms a stop portion 331 that protrudes from the inner wall of the guide portion 33 to perform a stopping function. As shown in Figure 1, the pivot connection end 31 is rotatably connected to a cap 34, through which the cap 34 achieves a waterproof effect.

As shown in Figures 1 to 6, the control assembly 40 is connected to the pivot connection end 31 of the ball clamp cover 30 and is used to control the ball clamping assembly 20 to clamp or release the trailer ball 10. The control assembly 40 includes a control handle 41 and a control rod 42 for controlling the ball clamping assembly 20. The control rod 42 passes through the pivot connection end 31 and is connected to the connection part 23 of the ball clamping assembly 20. The control handle 41 is connected to the control rod 42 in a lever manner. By operating the control handle 41, the control rod 42 descends, causing the clamping pieces 21 of the ball clamping assembly 20 to move downward and release from the trailer ball 10, or by operating the control handle 41, the control rod 42 rises.

As shown in Figure 2, the pivot connection end 31 of the ball clamp cover 30 is sequentially equipped with a limiting piece 51, a first plate 52, a second plate 53, and an adjustment knob 54 on a top of the pivot connection end 31. The limiting piece 51 holds the bars 25 at the top of the clamping pieces 21, allowing these clamping pieces 21 to pivot. The first plate 52 is installed on the top of the limiting piece 51 and has multiple detachment protrusions 521. The second plate 53 presses on the top of the first plate 52. The control rod 42 sequentially passes through the second plate 53, the first plate 52, and the limiting piece 51. The control rod 42 adjusts the position of the control rod 42 through the adjustment knob 54, and is connected to the ball clamping assembly 20. The control handle 41 has an arc protrusion end 411. When releasing the trailer ball 10, the arc protrusion end 411 contacts the detachment protrusions 521 of the first plate 52, allowing the clamping pieces 21 of the ball clamping assembly 20 to be quickly pressed down and release the trailer ball 10.

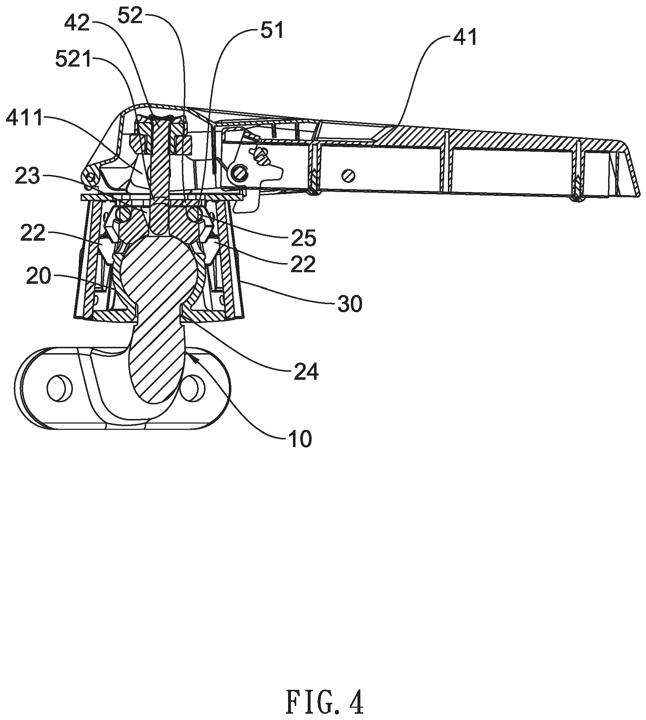

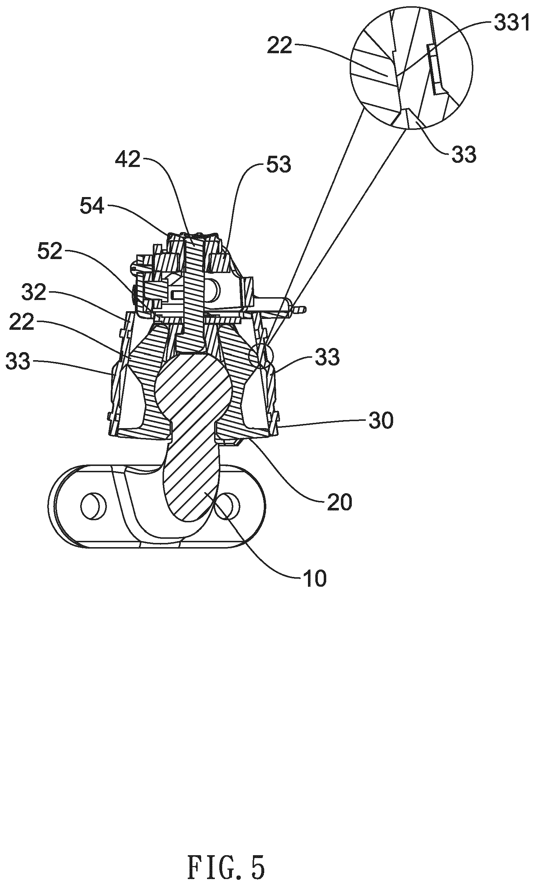

As shown in Figures 4 and 5, by operating the control handle 41 to move the control rod 42 upward, when the clamping pieces 21 rise, the guide portions 33 guide the locking edges 22 to rise along the angle formed by the boards 32 of the ball clamp cover 30, and in conjunction with the stop portion 331 creating a stopping force against the locking edges 22, achieving a tight fit while simultaneously positioning the ball clamping assembly 20.

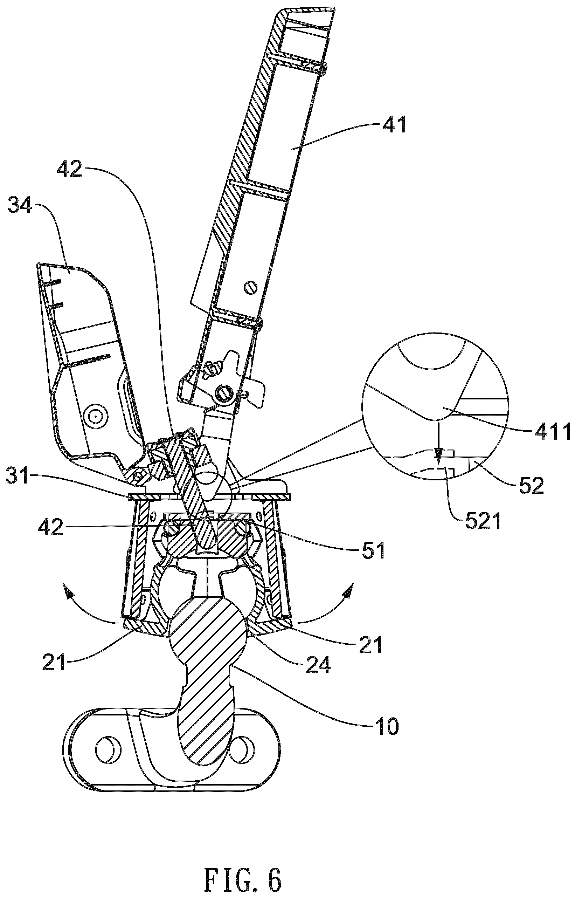

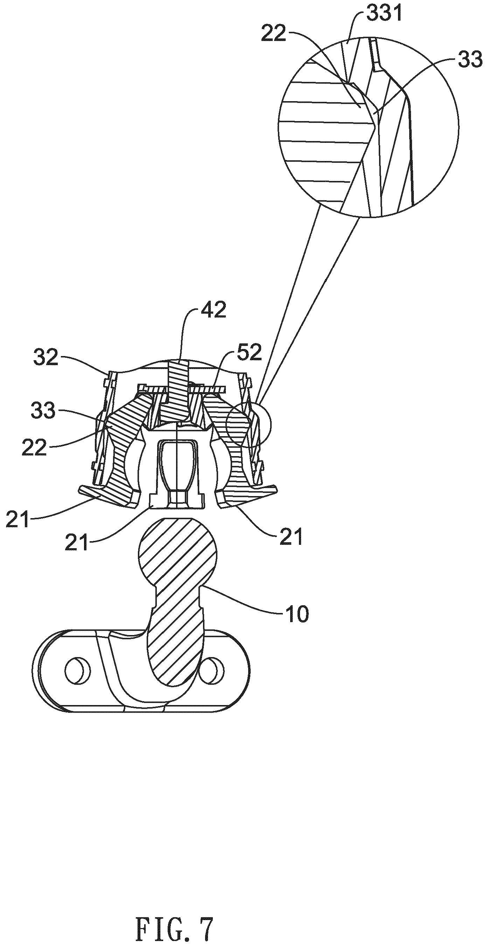

When releasing, as shown in Figures 6 to 7, through the guide portions 33 set up in the ball clamp cover 30, when the clamping pieces 21 descend, their locking edges 22 are inserted into the guide portions 33, allowing the opening 24 formed by the clamping pieces 21 to quickly expand, while simultaneously securing the clamping pieces 21 within the ball clamp cover 30 without detaching.

The present invention has protruding guide portions 33 formed to the boards 32 of the ball clamp cover 30. By operating the control handle 41, the ball clamping assembly 20 is inserted into the guide portions 33, allowing the ball clamping assembly 20 to open while simultaneously supporting the ball clamping assembly 20 to prevent it from drooping, eliminating the need to hold the ball clamping assembly 20 by hand. When operating the control handle 41 to clamp the ball clamping assembly 20 to the trailer ball 10, the guide portions 33 can quickly guide the ball clamping assembly 20 to move upward and secure it to the ball clamp cover 30, achieving a stable fixation effect.

Additionally, the detachment protrusions 521 are formed to the first plate 52. When operating the control handle 42, the arc protrusion end 411 contacts the detachment protrusions 521, allowing the first plate 52 to be quickly pressed down, and simultaneously bringing the ball clamping assembly 20 at the lower end downward, providing the advantage of improved operational efficiency.

While we have shown and described the embodiment in accordance with the present invention, it should be clear to those skilled in the art that further embodiments may be made without departing from the scope of the present invention.

## Claims

1. A bicycle carrier ball clamp stabilizing structure, comprising:
a trailer ball (10) adapted to be connected to a vehicle;
a ball clamping assembly (20) including three equally-spaced clamping pieces (21) which are adapted to clamp the trailer ball (10), each of the clamping pieces (21) having a locking edges (22) protruding from an outer side thereof, a connection part (23) located on a top of the ball clamping assembly (20), an opening (24) formed to a lower end of the ball clamping assembly (20);
a ball clamp cover (30) fitted over the ball clamping assembly (20) and having a pivot connection end (31) on a top thereof, the ball clamp cover (30) having multiple boards (32) which have outwardly protruding guide portions (33) located corresponding to the locking edges (22) of the clamping pieces (21);
a control assembly (40) connected to the pivot connection end (31) of the ball clamp cover (30) so as to control the ball clamping assembly (20) to clamp or release the trailer ball (10), the control assembly (40) including a control handle (41) and a control rod (42) for controlling the ball clamping assembly (40), the control rod (42) passing through the pivot connection end (31) and connected to the connection part (23) of the ball clamping assembly (20), the control handle (41) pivotably connected to the control rod (42), when operating the control handle (41) to descend the control rod (42), the clamping pieces (21) of the ball clamping assembly (20) moves downward and is released from the trailer ball (10), or when operating the control handle (41), the control rod (42) rises, the clamping pieces (21) of the ball clamping assembly (20) moves upward and secures the trailer ball (10), **characterized in that**:
when the ball clamping assembly (20) is to be released, the guide portions (33) of the ball clamp cover (10) insert into the locking edges (22) so as to create friction to achieve a buffered descent effect to prevent the ball clamping assembly (20) from detaching from the ball clamp cover (30).

2. The bicycle carrier ball clamp stabilizing structure as claimed in claim **1,** wherein the guide portions (33) of the ball clamp cover (30) gradually expand from top to bottom, the ball clamping assembly (20) descends along a slope of the boards (32) of the ball clamp cover (30).

3. A bicycle carrier ball clamp stabilizing structure, comprising:
a trailer ball (10) adapted to be connected to a vehicle;
a ball clamping assembly (20) including three equally-spaced clamping pieces (21) which are adapted to clamp the trailer ball (10), each of the clamping pieces (21) having a locking edges (22) protruding from an outer side thereof, a connection part (23) located on a top of the ball clamping assembly (20), an opening (24) formed to a lower end of the ball clamping assembly (20);
a ball clamp cover (30) fitted over the ball clamping assembly (20) and having a pivot connection end (31) on a top thereof, the ball clamp cover (30) having multiple boards (32) which have outwardly protruding guide portions (33) located corresponding to the locking edges (22) of the clamping pieces (21), each of the guide portions (33) having a stop portion (331) formed on an outside thereof;
a control assembly (40) connected to the pivot connection end (31) of the ball clamp cover (30) so as to control the ball clamping assembly (20) to clamp or release the trailer ball (10), the control assembly (40) including a control handle (41) and a control rod (42) for controlling the ball clamping assembly (40), the control rod (42) passing through the pivot connection end (31) and connected to the connection part (23) of the ball clamping assembly (20), the control handle (41) pivotably connected to the control rod (42), when operating the control handle (41) to descend the control rod (42), the clamping pieces (21) of the ball clamping assembly (20) moves downward and is released from the trailer ball (10), or when operating the control handle (41), the control rod (42) rises, the clamping pieces (21) of the ball clamping assembly (20) moves upward and secures the trailer ball (10), **characterized in that**:
when the control assembly (40) is operated downward, the locking edges (22) of the ball clamping assembly (20) climb along the guide portions (33), the stop portion (331) of the guide portion (33) secures the locking edges (22) in a locked state, the locking edges (22) of the ball clamping assembly (20) is engaged within the stop portion (331) to prevent detachment.

4. The bicycle carrier ball clamp stabilizing structure as claimed in claim 3, wherein the guide portions (33) of the ball clamp cover (30) gradually expand from top to bottom, the ball clamping assembly (20) ascends along a slope of the boards (32) of the ball clamp cover (30), thereby creating a fit with the stop portion (331).

5. A bicycle carrier ball clamp stabilizing structure, comprising:
a trailer ball (10) adapted to be connected to a vehicle;
a ball clamping assembly (20) including three equally-spaced clamping pieces (21) which are adapted to clamp the trailer ball (10), each of the clamping pieces (21) having a locking edges (22) protruding from an outer side thereof, a connection part (23) located on a top of the ball clamping assembly (20), an opening (24) formed to a lower end of the ball clamping assembly (20);
a ball clamp cover (30) fitted over the ball clamping assembly (20) and having a pivot connection end (31) on a top thereof, the ball clamp cover (30) having multiple boards (32) which have outwardly protruding guide portions (33) located corresponding to the locking edges (22) of the clamping pieces (21);
a control assembly (40) connected to the pivot connection end (31) of the ball clamp cover (30) so as to control the ball clamping assembly (20) to clamp or release the trailer ball (10), the control assembly (40) including a control handle (41) and a control rod (42) for controlling the ball clamping assembly (40), the control rod (42) passing through the pivot connection end (31) and connected to the connection part (23) of the ball clamping assembly (20), the control handle (41) pivotably connected to the control rod (42), when operating the control handle (41) to descend the control rod (42), the clamping pieces (21) of the ball clamping assembly (20) moves downward and is released from the trailer ball (10), or when operating the control handle (41), the control rod (42) rises, the clamping pieces (21) of the ball clamping assembly (20) moves upward and secures the trailer ball (10), **characterized in that**:
the pivot connection end (31) of the ball clamp cover (30) has a first plate (52), the first plate (52) has multiple detachment protrusions (521), the control handle (41) has an arc protrusion end (411), when releasing the trailer ball (10), the arc protrusion end (411) contacts the detachment protrusions (521) of the first plate (52), the first plate (52) moves downward along the ball clamp cover (30), and the clamping pieces (21) of the ball clamping assembly (20) moves downward and open.

6. A bicycle carrier ball clamp stabilizing structure as claimed in claim 5, wherein a limiting piece (51) is located below the first plate(52), a second plate (53) and an adjustment knob (54) are respectively located on a top of the first plate(52), the limiting piece (51) holds a bar (25) at a top of the clamping pieces (21) so that the clamping pieces (21) are pivotable, the first plate(52) is installed on a top of the limiting piece (51) and has multiple detachment protrusions (521), the second plate (53) presses on the top of the first plate(52), the control rod (42) sequentially passes through the second plate (53), the first plate(52), and the limiting piece (51), and is connected to the ball clamping assembly (20).

7. The bicycle carrier ball clamp stabilizing structure as claimed in claim **1,** 3, or 5, wherein the pivot connection end (31) of the ball clamp cover (30) is rotatably connected to a cap (34).
